# EUROPEAN PATENT SPECIFICATION

(11) **EP 2 510 157 B1**
(45) Date of publication and mention of the grant of the patent: **10.11.2021**
(21) Application number: 10801206.3
(22) Date of filing: 08.12.2010
(51) Int. Cl.: E02D 27/42

(54) **A STRUCTURE**
EINE STRUKTUR
UNE STRUCTURE

(30) Priority: 08.12.2009 GB 0921497
(43) Date of publication of application: 17.10.2012
(73) Proprietor: Atkins Limited, Epsom, Surrey KT18 5BW (GB)
(72) Inventor: HODGSON, Trevor, Laurencekirk Aberdeenshire AB30 1XS (GB)
(74) Representative: Bennett, Adrian Robert J.
(86) International application number: PCT/GB2010/002248
(87) International publication number: WO 2011/070325

(56) References cited:
- EP-A1- 1 774 122
- EP-A1- 2 072 685
- EP-A2- 1 813 808
- EP-A2- 2 067 914
- US-A1- 2006 267 348

## Description

The present invention relates to a structure and more particularly, but not exclusively, to a structure for supporting a wind-turbine in an offshore location.

A conventional wind-turbine construction typically comprises a wind-turbine mounted in a nacelle at an elevated location on a cylindrical mast. The mast extends from the ground and has a slender shape so as to ensure it does not obstruct the blades of the wind-turbine. Whilst this type of support structure is well suited for ground-based installations, it is not practical when the wind-turbine is to be located offshore. In these circumstances, a portion of support structure to be located in the water and secured to the seabed often comprises a trusswork structure. The trusswork structure provides a platform above the surface of the sea on which a cylindrical mast structure may be mounted.

It will be understood therefore that in a typical offshore wind-turbine installation, a first (upper) part of the structure is a slender cylindrical mast, and a second (lower) part of the structure is a trusswork structure, wherein the two parts are secured to one another by suitable means.

A prior art offshore wind-turbine installation is disclosed in US patent application number 11/630,869 (published as US 2008/0028715 A1). The installation disclosed in this prior art document comprises trusswork providing a large platform, at an upper end thereof, on which a supporting mast of a wind-turbine is mounted. The two parts of the structure (i.e. the trusswork and the mast) are connected to one another by means of tubular/conical struts which extend diagonally inwardly from supporting legs (columns) of the trusswork to engage with a lower portion of the mast. The upper ends of the diagonal struts, which engage the mast, are welded to the mast and to an annular plate projecting outwards from, and encircling, the mast.

In the prior art installation, four columns of the trusswork extend upwardly from pile foundations to a location above the surface of the sea. The upper ends of these columns are provided with a torsion plate, which forms part of the platform on which the mast is mounted and secured with the aforementioned diagonal struts. However, the four columns of the trusswork are arranged so that the planform of the platform has dimensions considerably larger than the diameter of the mast. As a consequence, the trusswork of the prior art installation is unduly bulky, particularly in the region of transition between the first part of the structure (i.e. the wind-turbine mast) and the second part of the structure (i.e. the trusswork).

A further prior art wind-turbine installation is disclosed in US patent application number 11/795,339 (published as US 2008/0290245 A1). This prior art document discloses a similar installation to that described in US patent application number 11/630,869. In particular, four columns of a trusswork extend upwardly from pile foundations and are described as being arranged so that their longitudinal axes meet near the centre of gravity of the wind-turbine. As a consequence, the platform provided at the upper ends of the columns (and on which the mast of the wind-turbine is mounted) has a planform considerably larger than the diameter of the wind-turbine mast and diagonal struts used in securing the mast to the platform extend inwardly at an angle to both the mast and the columns (as in the installation of US patent application number 11/630,869).

A particular problem with the prior art installations is that the transition between the first part of the structure and the second part of the structure is necessarily bulky and heavy in order to adequately transmit loads from the wind-turbine to the pile foundations in the seabed. This complicates the construction process and increases costs associated therewith. Furthermore, if the height of the platform above the seabed is to be varied for different installations (but for a given pile foundation planform) perhaps in order to vary the height of the wind turbine (or other elevated mass), then the arrangement of the diagonal struts in the region of the transition must be redesigned (since the spacing of the columns at their upper ends will change, as will the size of the platform as a consequence) and this redesign limits standardisation in the prior art installation.

A prior art tower for a wind power station is disclosed in US X,2006/267348, wherein a tower for a wind power station comprising a machine pod disposed on the tower and a rotor mounted on the machine pod so as to be rotatable about an essentially horizontal axis is disclosed. The rotor is provided with at least one blade. The tower is composed of a tubular upper section that is connected to a lower section which is embodied as a lattice tower in a transition zone. The lattice tower encompasses at least three corner posts. The upper tower section forms at least one sixth of the entire tower. The cross section of the lower tower section below the transition zone is greater than the cross section of the upper tower section while the transition zone is configured such that the cross section of the lower tower section is adjusted to the cross section of the upper tower section so as to optimize power flux.

It is an object of the present invention to provide a simple, light-weight and robust structure on which to mount a wind-turbine.

Embodiments according to the invention are set out in the independent claim 1 with further specific embodiments as set out in the dependent claims. All other configurations fall outside the scope of the claims.

In some embodiments, the present invention provides a structure comprising first and second parts connected to one another, the second part providing support for the first part; wherein the first part comprises an elongate column; and the second part comprises at least three elongate columns, and a transition device by means of which the first and second parts are connected; the transition device comprising at least three elongate struts secured relative to one another by securing means, wherein the elongate struts are positioned about a portion of the first part of said structure which is connected to the second part of said structure; characterised in that a central longitudinal axis of each elongate column of the second part extends from the associated column to converge on a single point and define an included angle therebetween, and each of said struts has a central longitudinal axis extending therefrom to converge on said single point and define an included angle substantially equal to said included angle of the elongate columns of the second part.

Ideally, the axis of each elongate column of the second part is coincident with a different central longitudinal axis of said struts of the transition device. Preferably, said single point is coincident with a central longitudinal axis of the elongate column of the first part. Furthermore, the axes of the second part may make the same included angle with the central longitudinal axis of the elongate column of the first part.

Preferably, said securing means comprises first securing means positioned at a first location along the lengths of the elongate struts and second securing means positioned at a second location along the lengths of the elongate struts.

First securing means of the securing means is ideally positioned at first ends of the elongate struts, wherein said first ends are preferably lower ends of the elongate struts. Similarly, second securing means of the securing means may be positioned at second ends of the elongate struts, wherein the second ends are distal to the first ends.

It is preferable for said portion of the first part of the structure to be positioned between the first and second securing means.

Each first and second securing means may be a unitary member, and each unitary member may be a generally planar plate. Ideally, one of said securing means is provided with an aperture through which said portion of the first part extends and, optionally, the other one of said securing means may define a bulkhead against which an end of said portion of the first part abuts.

It is also preferable for said portion of the first part of said structure to be connected to each or at least one elongate strut. Ideally, said portion of the first part of said structure is connected to an elongate strut along the full length of said elongate strut. It is particularly preferable for said connection between the first part and an elongate strut to be made by means of one or more planar web members. Ideally, said portion of the first part of said structure is connected to each elongate strut by means of two planar web members.

The elongate columns of the second part are preferably arranged relative to one another so as to define a frusto-conical shape. Ideally, said struts are arranged relative to one another so as to define a frusto-conical shape.

The first part of said structure may comprise a flange adjacent which the first securing means is located. Preferably, said flange is an annular shaped internal shoulder which extends radially inwardly from an inner surface of the first part. The securing means may abut an outer surface of the first part in a region concentric with said annular shaped internal shoulder. Ideally, said internal shoulder comprises an annular shoulder extending radially inwardly from an inner surface of said portion of the first part.

It is particularly preferable for said internal shoulder to comprise a first annular shoulder extending radially inwardly from an inner surface of said portion of the first part and a second annular shoulder extending radially inwardly from an inner surface of the remainder of the first part. Ideally, said portion of the first part of the structure and the remainder of the first part of the structure are discrete elements connected to one another by means of one or more fasteners extending through the first and second annular shoulders to form said flange.

Furthermore, in any of the mentioned arrangements, said portion of the first part of the structure and the remainder of the first part of the structure may be discrete elements.

In a preferred arrangement, the first part further comprises an elevated mass mounted to said elongate column and preferably to an upper end of said elongate column. The elevated mass may be a turbine, and is preferably a wind-turbine. The single point may be located below the centre of gravity of said elevated mass.

In some embodiments, a structure comprises first and second parts connected to one another, the second part providing support for the first part; wherein the first part comprises an elongate column; and the second part comprises at least three elongate columns, and a transition device by means of which the first and second parts are connected; the transition device comprising at least three elongate struts secured relative to one another by securing means, wherein the elongate struts are positioned about a portion of the first part of said structure which is connected to the second part of said structure; characterised in that each elongate column of the second part has a central longitudinal axis extending therefrom and each of said struts of the transition device has a central longitudinal axis extending therefrom, the axis of each elongate column of the second part being coincident with a different central longitudinal axis of said struts of the transition device.

In some embodiments, a structure comprises first and second parts connected to one another, the second part providing support for the first part; wherein the first part comprises an elongate column; and the second part comprises at least three elongate columns, and a transition device by means of which the first and second parts are connected; the transition device comprising at least three elongate struts secured relative to one another by securing means, wherein the elongate struts are positioned about a portion of the first part of said structure which is connected to the second part of said structure; characterised in that a central longitudinal axis of each elongate column of the second part extends from the associated column to converge on a single point located below the centre of gravity of an elevated mass mounted to said elongate column of the first part.

In some embodiments, a structure comprises first and second parts connected to one another, the second part providing support for the first part; wherein the first part comprises an elongate column; and the second part comprises at least three elongate columns, and a transition device by means of which the first and second parts are connected; the transition device comprising at least three elongate struts secured relative to one another by securing means, wherein the elongate struts are positioned about a portion of the first part of said structure which is connected to the second part of said structure; characterised in that said portion of the first part is connected to at least one of said elongate struts by means of one or more web members.

In some embodiments, a structure comprises first and second parts connected to one another, the second part providing support for the first part; wherein the first part comprises an elongate column; and the second part comprises at least three elongate columns, and a transition device by means of which the first and second parts are connected; the transition device comprising at least three elongate struts secured relative to one another by securing means, wherein the elongate struts are positioned about a portion of the first part of said structure which is connected to the second part of said structure; characterised in that the first part of said structure comprises a flange adjacent which the first securing means is located.

Further features of the present invention are provided as recited in any of the appended dependent claims.

An embodiment of the present invention will now be described with reference to the accompanying drawings, in which:
Figure 1 is a schematic side view of an offshore wind-turbine provided on a support jacket structure in accordance with the present invention;
Figure 2 is an enlarged schematic view of the support structure shown in Figure 1;
Figure 3 is a perspective view of a transition device, as shown in Figure 1, for connecting a mast (shown partially) of the wind-turbine to a support jacket structure (shown partially);
Figure 4 is a schematic side view of the partial perspective view of Figure 3;
Figure 5 is a plan view of the partial side view of Figure 4;
Figure 6 is a cross-sectional partial side view taken along line A - A in Figure 5; and

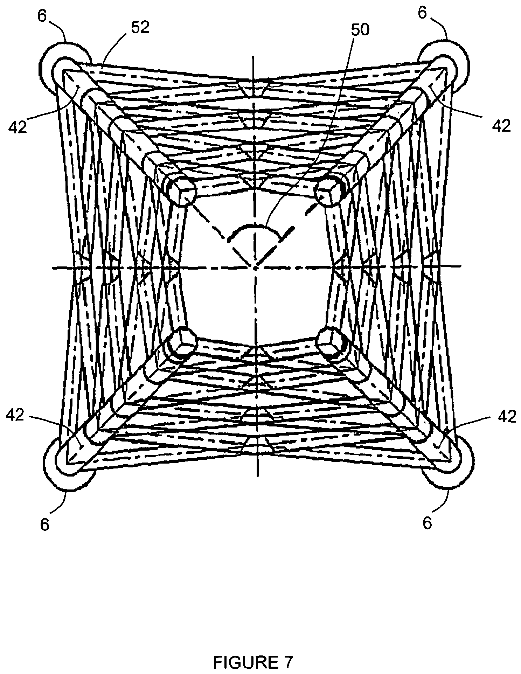

Figure 7 is a plan view of the support jacket structure shown in Figures 1 and 2.

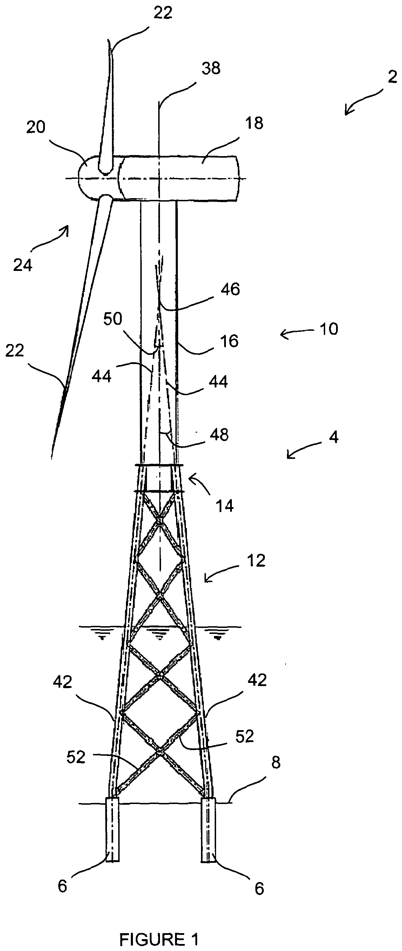

A wind-turbine installation 2 according to the present invention is shown in Figure 1 of the accompanying drawings. The installation is of a type which is located offshore and comprises a structure 4 mounted to foundation piles 6 pre-driven into a seabed 8.

The structure 4 comprises a first (upper) part 10 which is secured to a second (lower) part 12 by means of a transition device 14.

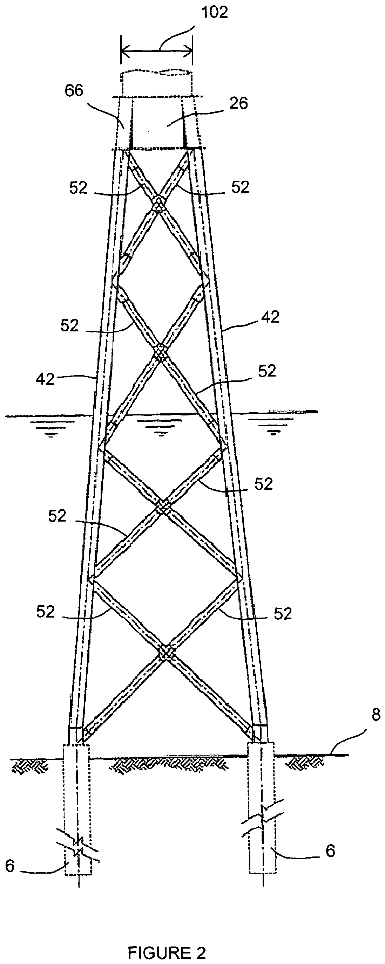

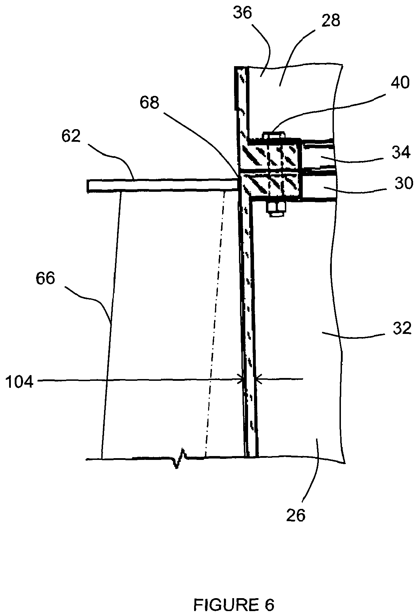

The first part 10 of the structure 4 includes a wind-turbine 24 mounted in a conventional fashion to an elongate column or mast 16. The mast 16 is generally cylindrical in shape and arranged in a vertical orientation. The specific dimensions of the mast 16 will vary depending on the size of the wind-turbine, however one example of a mast 16 has an outer diameter 102 of 5500 mm (see Figure 2) and a wall thickness 104 of 55 mm (see Figure 6).

The wind-turbine 24 is of a conventional type and the detail thereof will therefore be apparent to a reader skilled in the art and will not be described further herein. A nacelle 18, hub 20 and plurality of blades 22 associated with the wind-turbine 24 are shown in Figure 1 of the accompanying drawings.

With regard to the mast 16, a lower end portion 26 thereof is provided as a separate element to the remainder 28 of the mast 16. As is most clearly shown in Figure 6, an annular-shaped shoulder 30 extends radially inwardly from an inner cylindrical surface 32 of the lower end portion 26. The shoulder 30 of the lower end portion 26 of the mast 16 provides a flange for mating with the remainder (or remaining portion) 28 of the mast 16. In this latter regard, a second annular-shaped shoulder 34 is provided so as to extend radially inwardly from a cylindrical inner surface 36 of the remainder 28 of the mast 16. The second shoulder 34 provides a flange on the lower end of the remainder 28 of the mast 16 for mating with the first shoulder 30 of the lower end portion 26.

The two shoulders 30,34 are provided with a plurality of boltholes positioned about a longitudinal axis 38 of the mast 16. The boltholes of the two shoulders 30,34 align with one another when the two shoulders 30,34 are mated to one another and each aligned pair of boltholes 30,34 thereby allows reception of a threaded bolt 40 (or other suitable fastener) therethrough. Only one bolt 40 (and associated nut) is shown in the partial cross-sectional view of Figure 6.

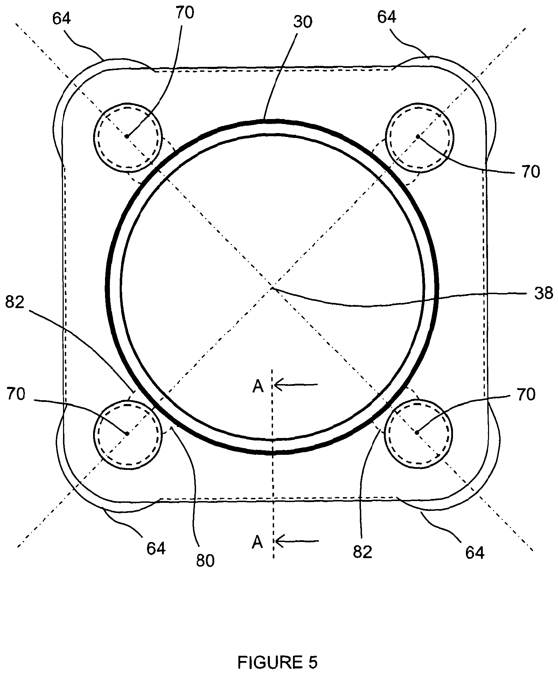

It will be appreciated that, whilst Figure 6 is a cross-sectional view taken along line A - A in Figure 5 of the accompanying drawings, only the lower end portion 26 of the first part 10 of the structure 4 is shown in Figure 5 without the remainder 28 of the mast 16 (with both the lower end portion 26 and the remainder 28 of the mast 16 being partially shown in Figure 6).

It will be understood that, by mating and subsequently fastening the two shoulders 30,34 in abutment with one another as shown in Figure 6, the lower end portion 26 and remainder 28 of the mast 16 are secured to one another. As will become apparent from the subsequent description, securing the lower end portion 26 and remainder 28 of the mast 16 in this way results in the remainder 28 of the mast 16 also being secured to the transition device 14 and, in turn, to the second lower part 12 of the structure 4.

The second part 12 of the structure 4 is a trusswork of steel tubulars which is mounted to the piles 6 in the seabed 8. The trusswork forms a jacket structure on which the mast 16 is mounted.

The trusswork is a four-legged structure, however it will be understood that an alternative number of legs may be provided (for example, some applications will be more suited to a three-legged structure). Each leg is provided as a straight steel tubular or column 42. The columns or legs 42 are arranged relative to one another so as to define a frusto-conical shape. Furthermore the legs 42 are arranged so that a longitudinal axis 44 of each leg 42 extends from the associated leg 42 and intersects with the longitudinal axis 38 of the mast 16. The longitudinal axes 44 of the legs 42 extend from the associated legs 42 and intersect with the longitudinal axis 38 of the mast 16 at the same point 46 (see Figure 1). This point 46 is located below the centre of gravity of wind-turbine 24.

The extended longitudinal axis 44 of each leg 42 forms an included angle 48 with the longitudinal axis 38 of the mast 16. The included angle 48 is the same for each leg 42. Similarly, the extended longitudinal axis 44 of each leg 42 forms an included angle 50 with the longitudinal axis 44 of an adjacent leg 42, wherein the pair of adjacent legs 42 are connected to one another by diagonally extending brace members 52. The included angle 50 between each pair of adjacent legs 42 is the same for each leg pair. It will be understood therefore that the trusswork, in this embodiment, is a symmetrical structure which is arranged symmetrically about the longitudinal axis 38 of the mast 16. In other words, the second part 12 has a longitudinal axis which is coincident with the longitudinal axis 38 of the mast 16. In an alternative embodiment, the trusswork may have an asymmetric character, particularly in circumstances where there is a dominant prevailing wind direction.

Each pair of adjacent legs 42 are connected to one another by four sets (or bays) of brace members 52. Each set of brace members includes two crossing members which extend diagonally from one leg 42 to the adjacent leg 42. It will be appreciated that a different number of bays may be used (for example, the use of three bays may be more appropriate for shallow waters where a shorter trusswork structure is needed than for deeper waters).

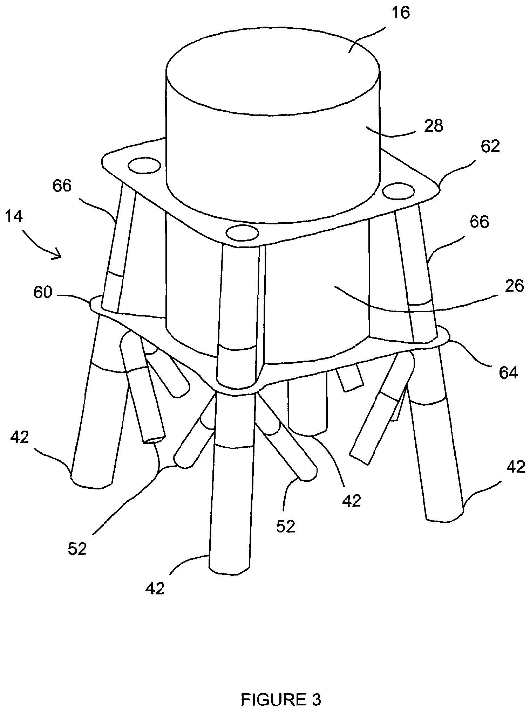

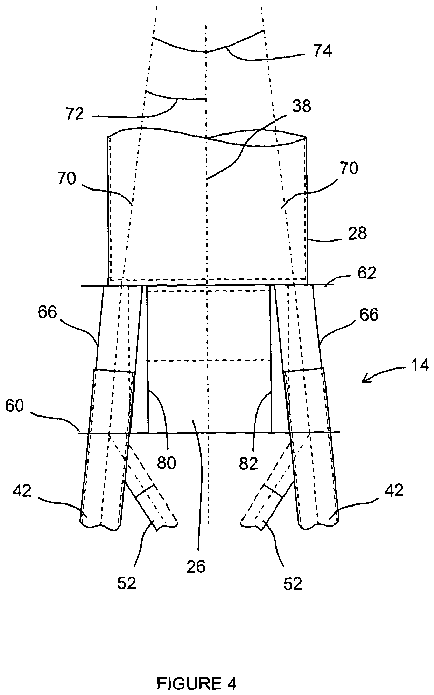

The first and second parts 10,12 of the structure 4 are connected to one another by means of a transition device 14. A perspective view of the transition device 14 is shown in Figure 3 of the accompanying drawings, and a corresponding side view is shown in Figure 4.

The transition device 14 includes a lower plate member 60 and an upper plate member 62. The plate members 60,62 are planar. The members 60,62 may be manufactured from steel.

In the particular embodiment shown in the accompanying drawings, the plate members 60,62 have a square shape with rounded corners. The two plates 60,62 are of the same size, however the lower plate member 60 is provided with lobes 64 at the corners thereof. The lobes 64 provide a part-circular edge to the lower plate 60 which has a greater radius than the rounded (part-circular) corners of the upper plate 62. The lobes 64 enlarge the planform of the lower plate member 60 beyond the square shape so as to allow for reception of diagonal tubular struts 66. The way in which the lobes 64 extend the planform of the lower plate member 60 can be readily seen from the plan view shown in Figure 5 of the accompanying drawings.

In an alternative embodiment (not shown), the lower plate member (and, optionally, the upper plate member) may be larger than shown in the accompanying drawings. The larger lower plate member no longer has the lobes 64 since the larger planform of the plate member obviates the need for them. The larger lower plate member has a square shape with rounded corners (similar to that of the upper plate member 62). The plate members 60,62 may have alternative shapes which may be dictated by the number of legs within the trusswork (for example, they may be triangular for a trusswork having three legs).

In the embodiment shown in the accompanying drawings, the upper plate member 62 is provided with an aperture 68 through which, in the assembled structure 4, the discrete portion 26 of the mast 16 is located. The aperture 68 has a circular shape located centrally in the plate member 62 and concentrically with the longitudinal axes of the two parts 10,12 of the structure 4. The diameter of the aperture 68 is the same as the outer diameter of the mast 16, and the mast 16 is connected to the plate member 62 at the aperture 68 by suitable means, for example, by welding.

Each strut 66 is provided as a straight steel tubular or column. The dimensions of the struts 66 are selected depending upon the forces they will need to resist when supporting the mast 16. The columns or struts 66 are arranged relative to one another so as to define a frusto-conical shape. Furthermore the struts 66 are arranged so that a longitudinal axis 70 of each strut 66 (see Figures 4 and 5) extends from the associated strut 66 and intersects with the longitudinal axis 38 of the mast 16. The longitudinal axes 70 of the struts 66 extend from the associated struts 66 and intersect with the longitudinal axis 38 of the mast 16 at the same point 46, and at the same point as the extended longitudinal axes 44 of the legs 42 (see Figure 1).

The extended longitudinal axis 70 of each strut 66 forms an included angle 72 with the longitudinal axis 38 of the mast 16 (see Figure 4). In the embodiment shown in the accompanying drawings, the included angle 72 is the same for each strut 66, and is also the same as the corresponding included angle 48 associated with the legs 42. Furthermore, the extended longitudinal axis 70 of each strut 66 forms an included angle 74 with the longitudinal axis 70 of an adjacent strut 66. The included angle 74 between each pair of adjacent struts 66 is the same for each strut pair in the present embodiment. It will be understood therefore that the transition device 14 of the present embodiment is a symmetrical structure which is arranged symmetrically about the longitudinal axis of the trusswork and the longitudinal axis 38 of the mast 16. In other words, the transition device 14 has a longitudinal axis which is coincident with the longitudinal axis of the trusswork and the longitudinal axis 38 of the mast 16.

Furthermore, each strut 66 is arranged so that its longitudinal axis 70 is coincident with the longitudinal axis 44 of a different one of the four legs 42. In this way, the struts 66 are positioned in line with the legs 42 and essentially form a continuation of the legs 42 through the lobes 64 of the lower plate member 60 to the corners of the upper plate member 62. The struts 66 are provided integrally with the legs 42 (in other words, they are continuous with the legs 42 with each leg 42 and its associated strut 66 being a unitary member). In an alternative embodiment, the struts 66 are provided as discrete members (in other words, they are separate from their associated legs).

It will be understood that, if the number of legs 42 is varied, then the number of struts 66 will be similarly varied so that each leg is effectively continued through the transition device 14 by an associated strut 66.

The lower plate member 60 is secured to lower ends of the struts 66, whilst the upper plate member 62 is secured to the upper ends of the struts 66. The plate members 60,62 may be secured to the struts 66 by means of welding. The relative positions of the struts 66 are thereby maintained.

Furthermore, each strut 66 is connected along its full length between the two plate members 60,62 to the discrete portion 26 of the mast 16 by means of web portions 80,82 (see Figures 4 and 5). The web portions 80,82 associated with a particular strut 66 are planar and, in the present embodiment, lie in planes which are parallel to one another. The web portions 80,82 may also be secured to the lower and upper plate members 60,62. The web portions 80,82 may be secured by means of welding. It will be appreciated therefore that, when the discrete portion 26 of the mast 16 receives the remainder 28 of the mast 16 as described above, the transition device 14 and first part 10 of the structure 4 are connected to one another. In turn, the first and second parts 10,12 of the structure 4 are connected to one another.

It will be seen from the accompanying drawings that the lower and upper plate members 60,62 are arranged one above the other in parallel planes. The plate members 60,62 are spaced from one another in a longitudinal direction. The plate members 60,62 may also be provided with apertures for receiving the struts 66. In a prefered embodiment, the upper plate member 62 is not provided with apertures for the struts 66. In this case, the struts 66 are connected (for example, by means of welding) to the underside of the upper plate member 62. Furthermore, the upper plate member 62 receives the upper ends of the struts 66 at locations coincident with or proximate to the edge of the aperture 68 in the upper plate 62. Specifically, a radially innermost part (with respect to the centre of the upper plate member 62) of the outer circumference of each strut 66 may be coincident with, or marginally spaced from, the circumferential edge of the aperture 68 in the upper plate 62. This arrangement allows the lateral dimension (i.e. width) of the transition device 14 and the trusswork to be minimised.

It will be appreciated that the position of the upper ends of the struts 66 relative to the mast 16 (and, therefore, to the aperture 68) should be maintained independently of the height of the trusswork, or the spacing of the piles 6. The alignment of the struts 66 with the legs 42 should also be maintained.

In addition, the shoulder 30 provided on the end of the discrete portion 26 of the mast 16 is provided with a longitudinal position which is coincident with the longitudinal position of the upper plate member 62. The shoulders 30,34 provided within the mast 16 provide the mast 16 with structural reinforcement which assists in resisting forces applied to the mast 16 by the upper plate member 62 in that region.

Upper and lower circumferences of the portion 26 of the mast 16 may be secured to the upper and lower plate members 62,60 respectively by, for example, welding.

Regarding the piles 6 of the particular embodiment shown in the accompanying drawings, these are pre-driven into the seabed 8 prior to the second part 12 being installed thereon. More specifically, the piles 6 are positioned using a template and cut level, and then the second part 12 is stabbed into the piles 6 and grouted in position. It will be appreciated that other types of foundation may be used depending upon the nature of the site.

The present invention is not limited to the specific embodiment described above. Alternative arrangements and suitable materials will be apparent to a reader skilled in the art. In one alternative embodiment, where the upper plate member 62 is not present, the upper ends of the struts may blend into the discrete portion 26 of the mast 16. Ideally, the upper ends of the struts blend entirely into the discrete portion 26 so that the entire circumference of a strut intersects with the discrete portion 26. This circumferential interface between the struts and the discrete portion 26 may be secured with welding along said interface. In a further alternative embodiment, neither the upper plate member 62 nor the lower plate member 60 are present. In this latter embodiment, it will be understood that the struts 66 are retained in position by means of their mounting to their respective legs and by means of their respective web portions 80,82. The upper ends of the struts may blend into the discrete portion 26 of the mast 16 as described above. In each of the embodiments described, the web portions 80,82 provide means for connecting the length (or at least a part of the length) of the struts 66 to the discrete portion 26 of the mast 16. In this way, the web portions 80,82 provide means by which the relative positions of the struts are secured/retained.

## Claims

1. A structure (4) comprising first and second parts (10, 12) connected to one another, the second part (12) providing support for the first part (10);
wherein the first part (10) comprises an elongate column having an elevated mass mounted thereon; and
the second part (12) comprises at least three elongate columns, and a transition device (14) by means of which the first and second parts (10, 12) are connected;
the transition device (14) comprising at least three elongate struts (66) secured relative to one another by securing means,
wherein the elongate struts (66) are positioned about a portion (26) of the first part (10) of said structure (4) which is connected to the second part (12) of said structure (4);
wherein a central longitudinal axis (44) of each elongate column (42) of the second part (12) extends from the associated column to converge on a single point (46) located below the centre of gravity of the elevated mass ;
the securing means comprising first securing means (60) positioned at a first location along the lengths of the elongate struts and second securing means (62) positioned at a second location along the lengths of the elongate struts,
wherein each first and second securing means (60, 62) is a unitary member, and
wherein one of said securing means is provided with an aperture (68) through
which said portion of the first part extends;
wherein the axis of each elongate column of the second part (12) is coincident with a different central longitudinal axis (70) of said struts (66) of the transition device (14).

2. A structure (4) as claimed in claim 1, wherein said single point (46) is coincident with a central longitudinal axis (38) of the elongate column (16) of the first part (10).

3. A structure (4) as claimed in claim 2, wherein the axes of the second part (12) make the same included angle (74) with the central longitudinal axis (38) of the elongate column (16) of the first part (10), preferably wherein an included angle (50) is defined between the central longitudinal axes (44) of the elongate columns (42) of the second part (12) and each of said struts (66) has a central longitudinal axis (70) extending therefrom to converge on said single point (46) and define an included angle (74) substantially equal to said included angle (50) of the elongate columns (42) of the second part (12).

4. A structure (4) as claimed in any of claims 1 to 3, wherein first securing means (60) of said securing means is positioned at first ends of the elongate struts (66), the first ends are lower ends of the struts, and wherein second securing means (62) of the securing means is positioned at second ends of the elongate struts (66), the second ends being distal to the first ends.

5. A structure (4) as claimed in any of claims 1 to 4, wherein said portion (26) of the first part (10) of the structure (4) is positioned between the first and second securing means (60, 62).

6. A structure (4) as claimed in any of claims 1 to 5, wherein each unitary member is a generally planar plate.

7. A structure (4) as claimed in any of claims 1 to 6, wherein:
the other one of said securing means (60) defines a bulkhead against which an end of said portion (26) of the first part (10) abuts.

8. A structure (4) as claimed in any of claims 1 to 7, wherein said portion (26) of the first part (10) of said structure (4) is connected to at least one elongate strut (66), and is preferably connected to each elongate strut (66), preferably wherein said connection between said portion (26) of the first part (10) of said structure (4) and an elongate strut (66) is provided along the full length of said elongate strut (66), and wherein said connection between the first part (10) and an elongate strut (66) is made by means of one or more planar web members (80, 82), preferably wherein said portion (26) of the first part (10) of said structure (4) is connected to an elongate strut (66) by means of two planar web members (80, 82).

9. A structure (4) as claimed in any of claims 1 to 8, wherein the elongate columns (42) of the second part (12) are arranged relative to one another so as to define a frusto-conical shape, preferably wherein said struts (66) are arranged relative to one another so as to define a frusto-conical shape.

10. A structure (4) as claimed in any of claims 1 to 9, wherein the first part (10) of said structure (4) comprises a flange adjacent which the first securing means (60) is located, wherein said flange is an annular shaped internal shoulder which extends radially inwardly from an inner surface (32) of the first part (10), and wherein said securing means abuts an outer surface of the first part (10) in a region concentric with said annular shaped internal shoulder.

11. A structure (4) as claimed in claim 10, wherein said internal shoulder comprises an annular shoulder (30) extending radially inwardly from an inner surface (32) of said portion (26) of the first part (10).

12. A structure (4) as claimed in claim 11, wherein said internal shoulder comprises a first annular shoulder (30) extending radially inwardly from an inner surface (32) of said portion (26) of the first part (10) and a second annular shoulder (34) extending radially inwardly from an inner surface (36) of the remainder (28) of the first part (10), preferably wherein said portion (26) of the first part (10) of the structure (4) and the remainder (28) of the first part (10) of the structure (4) are discrete elements connected to one another by means of one or more fasteners (40) extending through the first and second annular shoulders (30, 34) to form said flange.

13. A structure (4) as claimed in any of claims 1 to 12, wherein said portion (26) of the first part (10) of the structure (4) and the remainder (28) of the first part (10) of the structure (4) are discrete elements.

14. A structure (4) as claimed in any of claims 1 to 13, wherein said elevated mass is mounted to an upper end of said elongate column of said first part (10).

15. A structure (4) as claimed in any of claims 1 to 14, wherein said elevated mass is a turbine, and preferably a wind-turbine (24).

## Patentansprüche

1. Struktur (4), die einen ersten und einen zweiten Teil (10, 12) umfasst, die miteinander verbunden sind, wobei der zweite Teil (12) dem ersten Teil (10) eine Stütze bereitstellt;
wobei der erste Teil (10) eine längliche Säule umfasst, die eine erhöhte Masse, die darauf montiert ist, aufweist; und
der zweite Teil (12) wenigstens drei längliche Säulen und eine Übergangsvorrichtung (14) umfasst, mittels derer der erste und der zweite Teil (10, 12) verbunden sind;
die Übergangsvorrichtung (14) wenigstens drei längliche Streben (66) umfasst, die durch Befestigungsmittel relativ zueinander befestigt sind,
wobei die länglichen Streben (66) um einen Abschnitt (26) des ersten Teils (10) der Struktur (4) positioniert sind, der mit dem zweiten Teil (12) der Struktur (4) verbunden ist;
wobei sich eine zentrale Längsachse (44) jeder länglichen Säule (42) des zweiten Teils (12) von der zugehörigen Säule erstreckt, um an einem einzelnen Punkt (46), der sich unterhalb des Schwerpunkts der erhöhten Masse befindet, zu konvergieren;
wobei die Befestigungsmittel ein erstes Befestigungsmittel (60), das an einer ersten Stelle entlang der Längen der länglichen Streben positioniert ist, und ein zweites Befestigungsmittel (62) umfassen, das an einer zweiten Stelle entlang der Längen der länglichen Streben positioniert ist,
wobei jedes erste und zweite Befestigungsmittel (60, 62) ein einheitliches Bauteil ist und wobei eines der Befestigungsmittel mit einer Öffnung (68), durch die sich der Abschnitt des ersten Teils erstreckt, versehen ist;
wobei die Achse jeder länglichen Säule des zweiten Teils (12) mit einer unterschiedlichen zentralen Längsachse (70) der Streben (66) der Übergangsvorrichtung (14) zusammenfallend ist.

2. Struktur (4) nach Anspruch 1, wobei der einzelne Punkt (46) mit einer zentralen Längsachse (38) der länglichen Säule (16) des ersten Teils (10) zusammenfallend ist.

3. Struktur (4) nach Anspruch 2, wobei die Achsen des zweiten Teils (12) denselben eingeschlossenen Winkel (74) mit der zentralen Längsachse (38) der länglichen Säule (16) des ersten Teils (10) bilden, vorzugsweise wobei ein eingeschlossener Winkel (50) zwischen den zentralen Längsachsen (44) der länglichen Säulen (42) des zweiten Teils (12) definiert ist und jede der Streben (66) eine zentrale Längsachse (70) aufweist, die sich davon erstreckt, um an dem einzelnen Punkt (46) zu konvergieren und einen eingeschlossenen Winkel (74) zu definieren, der im Wesentlichen gleich dem eingeschlossenen Winkel (50) der länglichen Säulen (42) des zweiten Teils (12) ist.

4. Struktur (4) nach einem der Ansprüche 1 bis 3, wobei das erste Befestigungsmittel (60) der Befestigungsmittel an den ersten Enden der länglichen Streben (66) positioniert ist, die ersten Enden untere Enden der Streben sind und wobei das zweite Befestigungsmittel (62) der Befestigungsmittel an zweiten Enden der länglichen Streben (66) positioniert ist, wobei die zweiten Enden zu den ersten Enden distal sind.

5. Struktur (4) nach einem der Ansprüche 1 bis 4, wobei der Abschnitt (26) des ersten Teils (10) der Struktur (4) zwischen dem ersten und dem zweiten Befestigungsmittel (60, 62) positioniert ist.

6. Struktur (4) nach einem der Ansprüche 1 bis 5, wobei jedes einheitliche Bauteil eine im Allgemeinen ebene Platte ist.

7. Struktur (4) nach einem der Ansprüche 1 bis 6, wobei:
das andere der Befestigungsmittel (60) eine Trennwand definiert, gegen die ein Ende des Abschnitts (26) des ersten Teils (10) anstößt.

8. Struktur (4) nach einem der Ansprüche 1 bis 7, wobei der Abschnitt (26) des ersten Teils (10) der Struktur (4) mit wenigstens einer länglichen Strebe (66) verbunden ist und vorzugsweise mit jeder länglichen Strebe (66) verbunden ist, vorzugsweise wobei die Verbindung zwischen dem Abschnitt (26) des ersten Teils (10) der Struktur (4) und einer länglichen Strebe (66) entlang der gesamten Länge der länglichen Strebe (66) bereitgestellt ist und wobei die Verbindung zwischen dem ersten Teil (10) und einer länglichen Strebe (66) mittels eines oder mehrerer planarer Füllstabbauteile (80, 82) gebildet ist, vorzugsweise wobei der Abschnitt (26) des ersten Teils (10) der Struktur (4) mit einer länglichen Strebe (66) mittels zweier planarer Füllstabbauteile (80, 82) verbunden ist.

9. Struktur (4) nach einem der Ansprüche 1 bis 8, wobei die länglichen Säulen (42) des zweiten Teils (12) relativ zueinander angeordnet sind, so dass sie eine kegelstumpfförmige Form definieren, vorzugsweise wobei die Streben (66) relativ zueinander angeordnet sind, so dass sie eine kegelstumpfförmige Form definieren.

10. Struktur (4) nach einem der Ansprüche 1 bis 9, wobei der erste Teil (10) der Struktur (4) einen Flansch umfasst, an dem sich angrenzend das erste Befestigungsmittel (60) befindet, wobei der Flansch ein ringförmig geformter interner Vorsprung ist, der sich von einer Innenoberfläche (32) des ersten Teils (10) radial nach innen erstreckt, und wobei das Befestigungsmittel an einer Außenoberfläche des ersten Teils (10) in einem Bereich anstößt, der mit dem ringförmig geformten internen Vorsprung konzentrisch ist.

11. Struktur (4) nach Anspruch 10, wobei der interne Vorsprung einen ringförmigen Vorsprung (30) umfasst, der sich von einer Innenoberfläche (32) des Abschnitts (26) des ersten Teils (10) radial nach innen erstreckt.

12. Struktur (4) nach Anspruch 11, wobei der interne Vorsprung einen ersten ringförmigen Vorsprung (30), der sich von einer Innenoberfläche (32) des Abschnitts (26) des ersten Teils (10) radial nach innen erstreckt, und einen zweiten ringförmigen Vorsprung (34) umfasst, der sich von einer Innenoberfläche (36) des Rests (28) des ersten Teils (10) radial nach innen erstreckt, vorzugsweise wobei der Abschnitt (26) des ersten Teils (10) der Struktur (4) und der Rest (28) des ersten Teils (10) der Struktur (4) eigenständige Elemente sind, die mittels einer oder mehrerer Haltevorrichtungen (40), die sich durch den ersten und den zweiten ringförmigen Vorsprung (30, 34) erstrecken, miteinander verbunden sind, um den Flansch auszubilden.

13. Struktur (4) nach einem der Ansprüche 1 bis 12, wobei der Abschnitt (26) des ersten Teils (10) der Struktur (4) und der Rest (28) des ersten Teils (10) der Struktur (4) eigenständige Elemente sind.

14. Struktur (4) nach einem der Ansprüche 1 bis 13, wobei die erhöhte Masse an einem oberen Ende der länglichen Säule des ersten Teils (10) montiert ist.

15. Struktur (4) nach einem der Ansprüche 1 bis 14, wobei die erhöhte Masse eine Turbine und vorzugsweise eine Windturbine (24) ist.

## Revendications

1. Structure (4) comprenant des première et seconde parties (10, 12) reliées l'une à l'autre, la seconde partie (12) fournissant un support pour la première partie (10) ;
dans laquelle la première partie (10) comprend une colonne allongée sur laquelle est montée une masse élevée ; et
la seconde partie (12) comprend au moins trois colonnes allongées, et un dispositif de transition (14) au moyen duquel les première et seconde parties (10, 12) sont reliées ;
le dispositif de transition (14) comprenant au moins trois entretoises allongées (66) fixées les unes par rapport aux autres par des moyens de fixation,
dans laquelle les entretoises allongées (66) sont positionnées autour d'une partie (26) de la première partie (10) de ladite structure (4) qui est reliée à la seconde partie (12) de ladite structure (4) ;
dans laquelle un axe longitudinal central (44) de chaque colonne allongée (42) de la seconde partie (12) s'étend depuis la colonne associée pour converger vers un seul point (46) situé en dessous du centre de gravité de la masse élevée ;
les moyens de fixation comprenant des premiers moyens de fixation (60) positionnés à un premier emplacement le long des longueurs des entretoises allongées et des seconds moyens de fixation (62) positionnés à un second emplacement le long des longueurs des entretoises allongées,
dans laquelle chaque premier et second moyens de fixation (60, 62) est un élément unitaire, et dans laquelle l'un desdits moyens de fixation est pourvu d'une ouverture (68) à travers laquelle s'étend ladite partie de la première partie ;
dans laquelle l'axe de chaque colonne allongée de la seconde partie (12) coïncide avec un axe longitudinal central différent (70) desdites entretoises (66) du dispositif de transition (14).

2. Structure (4) selon la revendication 1, dans laquelle ledit seul point (46) coïncide avec un axe longitudinal central (38) de la colonne allongée (16) de la première partie (10).

3. Structure (4) selon la revendication 2, dans laquelle les axes de la seconde partie (12) font le même angle inclus (74) avec l'axe longitudinal central (38) de la colonne allongée (16) de la première partie (10), de préférence dans laquelle un angle inclus (50) est défini entre les axes longitudinaux centraux (44) des colonnes allongées (42) de la seconde partie (12) et chacune desdites entretoises (66) présente un axe longitudinal central (70) s'étendant à partir de celui-ci pour converger sur ledit seul point (46) et définir un angle inclus (74) sensiblement égal audit angle inclus (50) des colonnes allongées (42) de la seconde partie (12).

4. Structure (4) selon l'une quelconque des revendications 1 à 3, dans laquelle les premiers moyens de fixation (60) desdits moyens de fixation sont positionnés au niveau des premières extrémités des entretoises allongées (66), les premières extrémités sont les extrémités inférieures des entretoises, et dans laquelle des seconds moyens de fixation (62) des moyens de fixation sont positionnés au niveau des secondes extrémités des entretoises allongées (66), les secondes extrémités étant distales par rapport aux premières extrémités.

5. Structure (4) selon l'une quelconque des revendications 1 à 4, dans laquelle ladite partie (26) de la première partie (10) de la structure (4) est positionnée entre les premier et second moyens de fixation (60, 62).

6. Structure (4) selon l'une quelconque des revendications 1 à 5, dans laquelle chaque élément unitaire est une plaque généralement planaire.

7. Structure (4) selon l'une quelconque des revendications 1 à 6, dans laquelle :
l'autre desdits moyens de fixation (60) définit une cloison contre laquelle une extrémité de ladite partie (26) de la première partie (10) vient en butée.

8. Structure (4) selon l'une quelconque des revendications 1 à 7, dans laquelle ladite partie (26) de la première partie (10) de ladite structure (4) est reliée à au moins une entretoise allongée (66), et est de préférence reliée à chaque entretoise allongée (66), de préférence dans laquelle ladite liaison entre ladite partie (26) de la première partie (10) de ladite structure (4) et une entretoise allongée (66) est prévue sur toute la longueur de ladite entretoise allongée (66), et dans laquelle ladite liaison entre la première partie (10) et une entretoise allongée (66) est réalisée au moyen d'un ou plusieurs éléments d'âme planaires (80, 82), de préférence dans laquelle ladite partie (26) de la première partie (10) de ladite structure (4) est reliée à une entretoise allongée (66) au moyen de deux éléments d'âme planaires (80, 82).

9. Structure (4) selon l'une quelconque des revendications 1 à 8, dans laquelle les colonnes allongées (42) de la seconde partie (12) sont agencées les unes par rapport aux autres de manière à définir une forme tronconique, de préférence dans laquelle lesdites entretoises (66) sont disposées les unes par rapport aux autres de manière à définir une forme tronconique.

10. Structure (4) selon l'une quelconque des revendications 1 à 9, dans laquelle la première partie (10) de ladite structure (4) comprend une bride adjacente à laquelle se trouvent les premiers moyens de fixation (60), dans laquelle ladite bride est une forme annulaire épaulement interne qui s'étend radialement vers l'intérieur depuis une surface interne (32) de la première partie (10), et dans laquelle lesdits moyens de fixation viennent en butée contre une surface externe de la première partie (10) dans une région concentrique avec ledit épaulement interne de forme annulaire.

11. Structure (4) selon la revendication 10, dans laquelle ledit épaulement interne comprend un épaulement annulaire (30) s'étendant radialement vers l'intérieur depuis une surface interne (32) de ladite partie (26) de la première partie (10).

12. Structure (4) selon la revendication 11, dans laquelle ledit épaulement interne comprend un premier épaulement annulaire (30) s'étendant radialement vers l'intérieur depuis une surface interne (32) de ladite partie (26) de la première partie (10) et un second épaulement (34) s'étendant radialement vers l'intérieur depuis une surface intérieure (36) du reste (28) de la première partie (10), de préférence dans laquelle ladite partie (26) de la première partie (10) de la structure (4) et le reste (28) de la première partie (10) de la structure (4) sont des éléments discrets reliés entre eux au moyen d'une ou plusieurs attaches (40) s'étendant à travers les premier et second épaulements annulaires (30, 34) pour former ladite bride.

13. Structure (4) selon l'une quelconque des revendications 1 à 12, dans laquelle ladite partie (26) de la première partie (10) de la structure (4) et le reste (28) de la première partie (10) de la structure (4) sont des éléments discrets.

14. Structure (4) selon l'une quelconque des revendications 1 à 13, dans laquelle ladite masse élevée est montée sur une extrémité supérieure de ladite colonne allongée de ladite première partie (10).

15. Structure (4) selon l'une quelconque des revendications 1 à 14, dans laquelle ladite masse élevée est une turbine, et de préférence une éolienne (24).
